# EUROPÄISCHE PATENTANMELDUNG

(11) **EP 1 251 645 A2**
(43) Veröffentlichungstag der Anmeldung: **23.10.2002**
(21) Anmeldenummer: 02006948.0
(22) Anmeldetag: 26.03.2002
(51) Int. Cl.: H04B 3/54

(54) **Stromversorgungsstation und modulares Stromversorgungssystem zur Speisung mindestens einer Telekommunikationsanlage**

(30) Priorität: 04.04.2001 DE 10116804
(71) Anmelder: SIEMENS AKTIENGESELLSCHAFT, 80333 München (DE)
(72) Erfinder: Göbel, Steffen, 09577 Niederwiesa (DE); Hoffmann, Manfred, 92256 Hahnbach (DE)

(57) **Zusammenfassung**

Die Stromversorgungsstation (SV) weist auf mindestens zwei Stromversorgungsmodule (SM) zur parallelen Energiespeisung und mindestens ein Kommunikationsnetz (K) auf Basis eines Internet-Datenprotokolls zur datentechnischen Verbindung, an das die Stromversorgungsmodule angeschlossen sind. Das Modulare Stromversorgungssystem (MSS) weist zumindest auf eine dezentralen Stromversorgungsstation, eine zentrale Leitstelle (LS) zum fernsteuerbaren Austausch von externen Stationsdaten und das Kommunikationsnetz zur datentechnischen Verbindung der Leitstelle mit den jeweiligen Stromversorgungsstationen. Damit ist der Vorteil verbunden, dass ein einheitliches und weltweit angewandtes Datenprotokoll für alle an das Kommunikationsnetz angeschlossenen Teilnehmer verwendet werden kann. Weiterhin das Kommunikationsnetz durch den Netzknoten (NK) in ein internes und externes Kommunikationsnetz (IK,EK) aufgeteilt werden. Dadurch können insbesondere interne Stationsdaten auf dem internen Kommunikationsnetz und externe Stationsdaten auf dem externen Kommunikationsnetz ausgetauscht werden.

## Beschreibung

Die Erfindung betrifft eine Stromversorgungsstation mit mindestens zwei Stromversorgungsmodulen zur parallelen Energieeinspeisung. Die Erfindung betrifft weiterhin ein modulares Stromversorgungssystem mit mindestens einer Stromversorgungsstation und einer Leitstelle sowie die Verwendung einer Stromversorgungsstation und eines modularen Stromversorgungssystems.

Stromversorgungsstationen weisen zur der elektrischen Speisung von Telekommunikationsanlagen, wie z.B. von ISDN-Anlagen oder Vermittlungsstationen, eine Vielzahl von Stromversorgungskomponenten auf, wie z.B. Stromversorgungsmodule, Messmodule oder Stationsrechner zur Steuerung und Regelung der einzelnen Module. Häufig sind die Stromversorgungskomponenten zur Sicherstellung der Kommunikationseinrichtungen parallel schaltbar, so dass der Ausfall einer Komponente nicht die Funktionsfähigkeit der Stromversorgungsstation beeinträchtigen kann. Ferner verfügen die meisten Stromversorgungsstationen über Netzersatzanlagen, wie z.B. Akkumulatoren oder Diesel-Notstromaggregate, um bei Ausfall des Energieversorgungsnetzes einen weiteren Betrieb der Stromversorgungsstation bzw. der von dieser gespeisten Telekommunikationsanlagen zu ermöglichen.

Viele Stromversorgungskomponenten innerhalb einer Stromversorgungsstation sind heute vorwiegend über einen Feldbus miteinander vernetzt. Die Kommunikation der Komponenten untereinander erfolgt dabei für die Steuer- und Regelungsaufgaben über spezielle applikationsspezifische Datenprotokolle.

Zusätzlich sind die Stromversorgungsstationen über ein anderes Kommunikationsmedium an eine übergeordnete Leitstelle z.B. zur Überwachung der Stromversorgungsstation angeschlossen. Diese Leitstelle bildet zusammen mit den zumeist dezentral bzw. regional verteilten Stromversorgungsstationen ein Stromversorgungssystem. An dieses Stromversorgungssystem können dabei modular neue Stromversorgungsstationen für eine Erweiterung angeschlossen werden. Von dieser Leitstelle aus kann z.B. der Status einer Stromversorgungsstation mit den jeweiligen Komponenten hinsichtlich ihrer Verfügbarkeit abgefragt werden. Die Kommunikation zwischen der Leitstelle und dem Stationsrechner als Master der jeweiligen Stromversorgungsstationen erfolgt üblicherweise in einer Punkt-zu-Punkt-Verbindung, wie z.B. mittels eines an das Telefonnetz angeschlossenen Modems.

Nachteilig darin ist, dass zur Übertragung aller internen Daten innerhalb der Stromversorgungsstation zur Leitstelle umkonvertiert werden müssen. Es ist daher notwendig, dass der Stationsrechner für jede Abfrage durch die Leitstelle eine Umsetzung des internen Feldbusprotokolls in das externe Datenübertragungsprotokoll vornehmen muss. Der gleiche Sachverhalt trifft auch für die umgekehrte Reihenfolge zu, wenn z.B. neue Daten von der Leitstelle, wie z.B. neue Betriebsparameter, an die jeweiligen Komponenten der Stromversorgungsstation, wie z.B. Gleichrichter- oder Messmodule, übermittelt werden sollen.

Ein weiterer Nachteil ist, dass bei Ausfall des Stationsrechners als Master der Stromversorgungsstation zur Steuerung der einzelnen Module kein Betrieb mehr oder zumindest nur noch ein Notbetrieb der Stromversorgungsstation möglich ist. Die Anschaffung eines dafür redundanten Rechnersystems ist in den vielen Fällen zu teuer.

Der Erfindung liegt somit die Aufgabe zu Grunde, eine Stromversorgungsstation sowie ein modulares Stromversorgungssystem anzugeben, welche die o.g. Nachteile vermeidet.

Die Aufgabe wird gelöst Stromversorgungsstation mit mindestens zwei Stromversorgungsmodulen zur parallelen Energiespeisung und mindestens einem Kommunikationsnetz auf Basis eines Internet-Datenprotokolls zur datentechnischen Verbindung, an das die Stromversorgungsmodule angeschlossen sind. Weitere Ausgestaltungen der Stromversorgungsstation sind in den Unteransprüchen 2 bis 24 angegeben.

Die Aufgabe wird weiterhin mit einem modularen Stromversorgungssystem gemäß Anspruch 25 gelöst. Weiter Ausgestaltungen des modularen Stromversorgungssystems sind in den Unteransprüchen 26 bis 30 angegeben.

Verwendungen der Stromversorgungsstation sowie des modularen Stromversorgungssystem sind in den Ansprüchen 31 bzw. 32 angegeben.

Die Erfindung wird an Hand der nachfolgenden Figuren näher erläutert. Dabei zeigt
- FIG 1 :: einen beispielhaften Aufbau einer Stromversorgungsstation mit einem Kommunikationsnetz zur datentechnischen Verbindung gemäß der Erfindung,
- FIG 2 :: einen beispielhaften Aufbau eines Routers als erfindungsgemäße Ausbildung eines Netzknotens des Kommunikationsnetzes,
- FIG 3 :: einen beispielhaften Aufbau eines modularen Stromversorgungssystems gemäß der Erfindung mit einer Leitstelle und drei dezentralen Stromversorgungsstationen,
- FIG 4 :: einen beispielhaften Aufbau einer erfindungsgemäßen IT-Plattform mit einem Netzinterface zur datentechnischen Verbindung und Mitteln zur Durchführung von IT-Dienstapplikationen und Applikationen zur Steuerung- und Regelung bzw. zum Bedienen und Beobachten der Stromversorgungsstationen, und
- FIG 5 :: eine durch einen Browser beispielhaft dargestellte Webseite auf einem Display in einer Leitstelle zum Bedienen und Beobachten der dezentralen Stromversorgungsstationen.

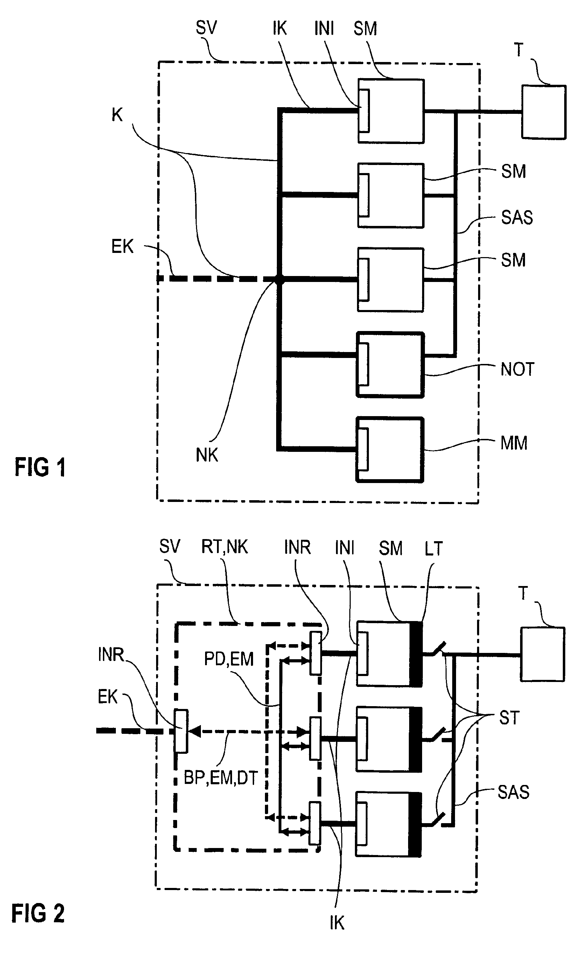

FIG 1 zeigt einen beispielhaften Aufbau einer Stromversorgungsstation (SV) mit einem Kommunikationsnetz (K) zur datentechnischen Verbindung mit drei Stromversorgungsmodulen (SM), mit einer beispielhaften Netzersatzanlage (NOT) und einem beispielhaften Messmodul (MM) gemäß der Erfindung. Die Stromversorgungsmodule (SM), wie z.B. Gleichrichter oder Wechselrichter, sind dabei ausgangsseitig durch eine Stromsammelschiene (SAS) verbunden, mittels welcher ein beispielhafter Telekommunikationsverbraucher (T) elektrisch gespeist werden kann. Die Netzersatzanlage (NOT) dient der Energieversorgung für die Stromversorgungsstation (SV) für den Fall, dass die Hauptenergieversorgung durch das öffentliche Stromnetz ausfällt. Als Netzersatzanlage (NOT) werden z.B. unterbrechungsfreie Stromversorgungen, welche aus Akkumulatoren gespeist werden, oder auch Dieselaggregate eingesetzt. Das Messmodul (MM) dient der Messwerterfassung z.B. von Strömen und Spannungen der jeweiligen Stromversorgungsmodule (SM) sowie deren Einspeisung aus dem öffentlichen Stromnetz. Die o.g. Module (SM, NOT,MM) weisen zudem im Beispiel der FIG 1 ein erstes integriertes Netzinterface (INI) zur datentechnischen Verbindung mit dem Kommunikationsnetz (K) auf. Das Trägermedium des Kommunikationsnetz (K) kann dabei z.B. eine elektrische oder optische Ethernet-Busleitung, eine Zweidrahtleitung oder auch eine Funkverbindung, wie z.B. auf Basis des Bluetooth- oder Wireless-LAN-Standards, sein. Als Kommunikationsnetz (K) kann z.B. auch das 400V/230V-Hausnetz dienen. Das Aufmodulieren der zu übertragenden Signale kann dabei z.B. nach dem PowerLine-Standard erfolgen.

Erfindungsgemäß wird für das Kommunikationsnetz (K) ein standardisiertes Internet-Datenprotokoll, wie z.B. das TCP/IP-Datenprotokoll verwendet. Dadurch ist er vorteilhaft möglich, dass ein einheitliches und weltweit angewandtes Datenprotokoll für alle an das Kommunikationsnetz (K) angeschlossenen Teilnehmer einschließlich der o.g. Module (SM,NOT,MM) zur datentechnischen Verbindung verwendet werden kann.

Weiterhin ist im Beispiel der FIG 1 erfindungsgemäß ein Netzknoten (NK) dargestellt, welcher das Kommunikationsnetz (K) in ein internes und in ein externes Kommunikationsnetz (IK,EK) teilt. Damit ist der Vorteil verbunden, dass interne Stationsdaten (PD,EM) zur Steuerung und Regelung mittels des internen Kommunikationsnetzes (IK) zwischen den Modulen (SM,NOT, MM) ausgetauscht werden können, ohne das externe Kommunikationsnetz (EK) zu belasten. Die Kommunikation über das interne Kommunikationsnetz (IK) kann dabei mit hoher Geschwindigkeit und mit einem hohen Datendurchsatz erfolgen. Als internes Kommunikationsnetz (IK) kann z.B. ein auf dem Internet-Datenprotokoll basierendes Intranet verwendet werden. Das externe Kommunikationsnetz (EK) kann dabei vorteilhaft das weltweit verwendete Internet sein.

Weiterhin erfindungsgemäß kann sowohl das interne wie auch das externe Kommunikationsnetz (IK,EK) das Intranet sein. Damit ist der Vorteil verbunden, dass z.B. in einem nicht öffentlichen Netz, wie z.B. in einem Firmennetz zwischen den Firmengebäuden innerhalb einer Stadt, höhere Sicherheits- und Stabilitätsanforderungen erfüllt werden können.

FIG 2 zeigt einen beispielhaften Aufbau eines Routers (RT) als erfindungsgemäße Ausbildung des Netzknotens (NK) des Kommunikationsnetzes (K). Hierzu weist der Router (RT) im Beispiel der FIG 2 vier zweite integrierte Netzinterface (INR) zur datentechnischen Verbindung auf. Das erste der zweiten integrierten Netzinterface (INR) ist dabei mit dem externen Kommunikationsnetz (EK) verbunden. Die verbleibenden drei zweite integrierte Netzinterface (INR) sind jeweils mit den ersten integrierten Netzinterface (INI) der beispielhaften drei Stromversorgungsmodule (SM) an das internen Kommunikationsnetz (IK) angeschlossen.

Gemäß der Erfindung weist der Router (RT) zudem Mittel zur Verbindungsherstellung zwischen den einzelnen zweiten integrierten Netzinterface (INR) auf. Die Verbindung wird hierzu durch Auswertung der bei einer Datenübertragung im Datenpaket angegebenen IP-Adresse entsprechend hergestellt. Es wird dann eine Verbindung zu einem korrespondierenden weiteren zweiten Netzinterface (INR) geschaltet. Der Router (RT) kann weiterhin entsprechend mit speziellen Sicherheits- und Zugriffsmechanismen ausgestattet sein, so dass nur legitimierte Zugriff von dem externen in das interne Kommunikationsnetz (EK,IK) möglich sind.

Dadurch ist es vorteilhaft möglich, dass internen Stationsdaten (PD,EM), insbesondere die zur Regelung und Steuerung zwischen den o.g. Modulen (SM,NOT,MM) benötigten Prozessdaten (PD) und elektronischen Meldungen (EM), korrekt innerhalb des internen Kommunikationsnetz (IK) vermittelt werden. Die o.g. Prozessdaten (PD) können dabei z.B. Messwerte oder Soll-/und Istwerte sein für einen Regelungsprozess sein. Diese können z.B. mittels eines HTTP-Protokolls auf Basis des TCP/IP-Datenprotokolls übertragen werden. Die elektronischen Meldungen (EM) können z.B. mittels eines E-mail-Datenprotokolls, wie z.B. eines auf dem TCP/IP-Protokoll basierenden SMTP-Protokolls, oder auch als SMS übermittelt werden. Die elektronischen Meldungen (EM) können dabei z.B. Alarmmeldungen oder Warnungen z.B. bei Ausfall eines Moduls beinhalten.

Weiterhin ist es vorteilhaft möglich, dass externe Stationsdaten (BP,EM,DT), insbesondere die zum Bedienen und Beobachten benötigten Betriebsparameter (BP), elektronischen Meldungen (EM) und Dateien (DT), zwischen dem externen Kommunikationsnetz (EK) und dem internen Kommunikationsnetz (IK) ausgetauscht werden können. Dabei können die Betriebsparameter (BP) z.B. Konfigurationsparameter oder Statuswerte der jeweiligen Module (SM,NOT,MM) sein. Die elektronischen Meldungen (EM) können beispielsweise Alarmmeldungen aus einer Stromversorgungsstation (SV) an eine an das externe Kommunikationsnetz (EK) angeschlossene Leitstelle (LS) sein. Dadurch kann z.B. in einem Fehlerfall ein Monteur informiert werden und dieser im Anschluss den Fehler in der Stromversorgungsstation (SV) beheben. Die o.g. Dateien (DT) können z.B. aktualisierte Versionen von Applikationen sein, die zur Regelung und Steuerung der jeweiligen Module (SM,NOT,MM) dienen. Zur Übertragung dieser Dateien kann vorteilhaft das auf dem TCP/IP-Protokoll basierende FTP-Protokoll verwendet werden. Wie oben beschrieben, können die zu übermittelnden externen Stationsdaten (BP,EM,DT) wieder durch Auswertung der IP-Adressen durch den Router (RT) zwischen den zweiten integrierten Netzinterface (INR) vermittelt werden.

Ferner ist im Beispiel der FIG 2 eine Stromsammelschiene (SAS) zu sehen, die zur parallelen Einspeisung der Stromversorgungsmodule (SM) dient. In einem Fehlerfall kann durch Öffnen des entsprechenden Schalters (ST) ein fehlerhaftes Stromversorgungsmodul (SM) von der Stromsammelschiene (SAS) getrennt werden. Weiterhin ist im rechten Teil der Stromversorgungsmodule (SM) der energietechnische Leistungsteil (LT) erkennbar, der z.B. die Gleichrichter, Leistungstransistoren oder Thyristoren enthalten kann.

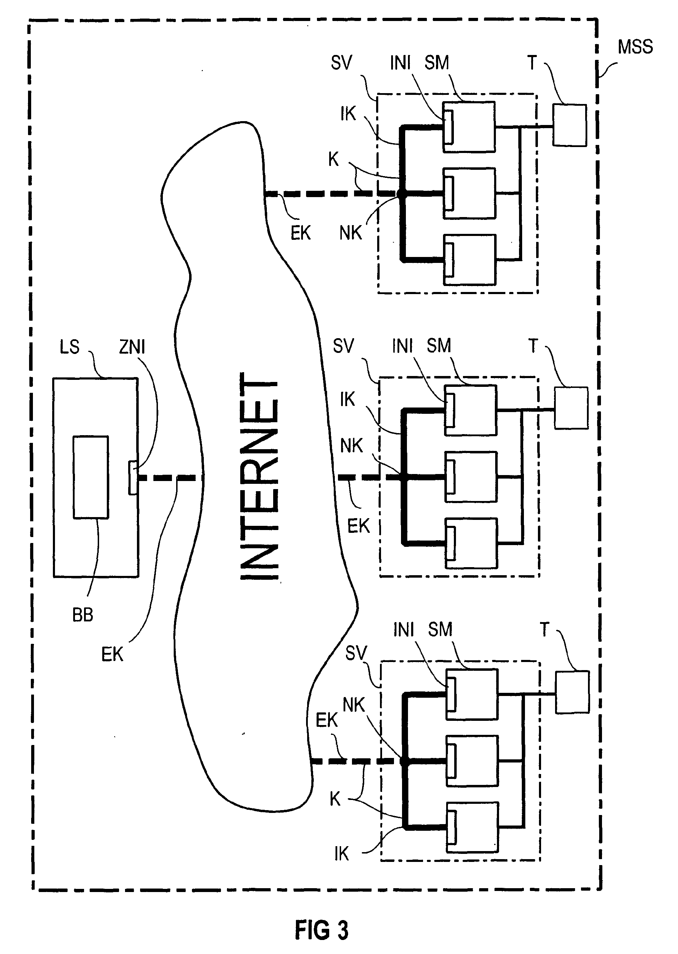

FIG 3 zeigt einen beispielhaften Aufbau eines modularen Stromversorgungssystems (MSS) gemäß der Erfindung mit einer Leitstelle (LS) und drei dezentralen Stromversorgungsstationen (SV). Dabei sind im Beispiel der Figur die drei Stromversorgungsstationen (SV) und die Leitstelle (LS) über das als Internet ausgebildete externe Kommunikationsnetz (EK) verbunden. Zur datentechnischen Verbindung zum externen Kommunikationsnetz (EK) weist die Leitstelle (LS) ein zentrales integriertes Netzinterface (ZNI) auf. Damit ist der Vorteil verbunden, dass über das beispielhaft dargestellte Internet insbesondere die o.g. Stationsdaten (BP,EM,DT) zwischen der Leitstelle (LS) und den jeweiligen Stromversorgungsstation (SV) ausgetauscht werden können. Dabei kann vorteilhaft ein einheitliches Internet-Datenprotokoll, wie z.B. das TCP/IP-Datenprotokoll, sowohl für das beispielhafte Internet als auch für das interne Kommunikationsnetz (IK) der jeweiligen Stromversorgungsstation (SV) verwendet werden. Die beispielhafte Leitstelle (LS) kann zudem über ein Display (BB) zum Bedienen und Beobachten der jeweiligen Stromversorgungsstation (SV) durch eine datentechnische Aufbereitung insbesondere der externen Stationsdaten (BP,EM, DT) verfügen. Darüber hinaus kann die Leitstelle (LS) z.B. auch ein mobiles Notebook, ein Mobiltelefon oder auch ein PDA sein, das mittels des zentralen integrierten Netzinterface (ZNI) über ein Kabel oder über Funk an das externe Kommunikationsnetz (EK) angeschlossen ist.

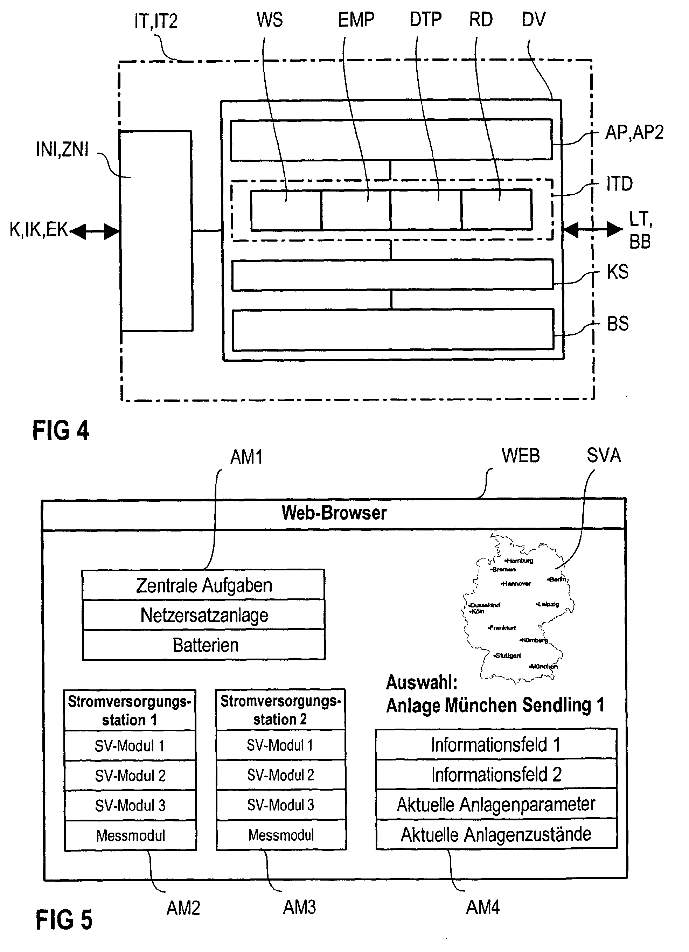

FIG 4 zeigt in einer Figur zur vereinfachten Darstellung einen beispielhaften Aufbau einer erfindungsgemäßen IT-Plattform (IT) eines Moduls (SM,NOT,MM) bzw. eine IT-Plattform (IT2) einer Leitstelle (LS) mit einem Netzinterface (INI,ZNI). Das Netzinterface (ZNI,INI) ist dabei stellvertretend für ein erstes integriertes Netzinterface (INI) und einem zentralen Netzinterface (ZNI) dargestellt. Ferner dient dieses Netzinterface (INI,ZNI) zur datentechnischen Verbindung mit dem jeweiligen Kommunikationsnetz (K,IK,EK). Weiterhin weist die IT-Plattform (IT,IT2) eine Datenverarbeitungseinheit (DV) mit Mitteln zum Ausführen von Softwareroutinen wie eines Betriebssystems (BS), eines Kommunikations-Stacks (KS), von IT-Dienstapplikationen (ITD) sowie von Applikationen (AP,AP2) auf. Das Betriebssystem (BS) ist zweckmäßigerweise ein Multitasking-Betriebssystem zur simultanen Ausführung von mehreren programmtechnischen Aufgaben, wie z.B. der IT-Dienstapplikationen (ITD). Der Kommunikations-Stack (KS) dient zur Pufferung und Verwaltung der parallel ausführbaren IT-Dienstapplikationen (ITD). Eine IT-Dienstapplikation (ITD) kann z.B. ein Web-Server (WS) sein. Dieser kann vorteilhaft die mittels eines Web-Browsers darstellbaren Webseiten (WEB) verwalten und zum Abruf im HTTP-Protokoll z.B. durch die Leitstelle (LS) bereithalten. Weiterhin kann ein E-mail-Programm (EMP) als IT-Dienstapplikation (ITD) z.B. die eingangs genannten Alarmmeldungen (EM) vorteilhaft im SMTP-Protokoll versenden. Durch das Datei-Transfer-Programm (DTP) als weitere IT-Dienstapplikation (ITD) können parallel dazu Dateien (DT) gesendet bzw. empfangen werden, wie z.B. zum Aufund Abladen von aktualisierten Applikationen (AP,AP2). Dazu kann z.B. vorteilhaft das FTP-Protokoll auf Basis des TCP/IP-Datenprotokolls verwendet werden. Weiterhin kann für zukünftige IT-Anwendungen Programmspeicher für eine Reserve-IT-Dienstapplikation (RD) reserviert werden.

Die IT-Plattform (IT) der Stromversorgungsmodule (SM) beinhalten zudem zumindest eine Applikation zur Steuerung und Regelung (AP) insbesondere des Leistungsteils (LT) eines Stromversorgungsmoduls (SM). Bei Verwendung von identischen IT-Plattformen (IT) ist es zudem möglich, dass zumindest eine erste Applikation (AP) die Masterfunktion zur Steuerung und Regelung der Stromversorgungsmodule (SM) innerhalb einer Stromversorgungsstation (SV) übernimmt. Dadurch kann vorteilhaft auf einen separaten Stationsrechner verzichtet werden. Weiterhin kann eine zweite Applikation (AP) einer weiteren identischen IT-Plattform (IT) die Masterfunktion zur Steuerung und Regelung der Stromversorgungsmodule (SM) übernehmen. Dies ist für den Fall vorgesehen, wenn die erste Applikation (AP) zur Durchführung der Masterfunktion aufgrund eines technischen Fehlers in der ersten IT-Plattform (IT) ausfallen sollte. Damit ist der Vorteil verbunden, dass die Stromversorgungsstation (SV) bei Ausfall eines Stromversorgungsmoduls (SM) oder der IT-Plattform (IT) eines Stromversorgungsmoduls (SM) weiterhin einsatzfähig bleibt.

Weiterhin kann die Leitstelle (LS) eine IT-Plattform (IT2) aufweisen, welche bis auf die Applikation (AP,AP2) die gleichen Komponenten wie die IT-Plattform (IT) eines Stromversorgungsmoduls (SM) aufweist. Die Applikation (AP2) dient bei der Leitstelle (LS) zum Bedienen und Beobachten der einzelnen dezentralen Stromversorgungsstation (SV). Die von den Stromversorgungsstation (SV) abgefragten externen Stationsdaten (BP, EM,DT) können dabei vorteilhaft z.B. auf einem Display (BB) dargestellt und verfolgt werden.

FIG 5 zeigt eine durch einen Browser beispielhaft dargestellte Webseite (WEB) auf einem Display (BB) in einer Leitstelle zum Bedienen und Beobachten der dezentralen Stromversorgungsstationen (SV). Dabei ist im Beispiel der FIG 5 auf einer Landeskarte eine Stromversorgungsstation (SV) auswählbar, wie z.B. die Anlage in München Sendling 1. Im beispielhaften Abfragemodul (AM2,3) können dann die einzelnen Module (SM,NOT,MM) hinsichtlich ihres Status abgefragt werden. Die übergeordneten Anlagenparameter und Anlagenzustände können über das beispielhafte Abfragemodul (AM4) abgefragt werden. Für zentrale Aufgaben oder zur Statusabfrage der Netzersatzanlage (NOT) oder der Batterien (NOT) ist im Beispiel der FIG 5 ein separates Abfragemodul (AM1) vorgesehen.

## Patentansprüche

1. Stromversorgungsstation (SV) mit mindestens zwei Stromversorgungsmodulen (SM) zur parallelen Energiespeisung und mindestens einem Kommunikationsnetz (K) auf Basis eines Internet-Datenprotokolls zur datentechnischen Verbindung, an das die Stromversorgungsmodule (SM) angeschlossen sind.

2. Stromversorgungsstation (SV) nach Anspruch 1 mit zumindest einer Netzersatzanlage (NOT) zur parallelen Energiespeisung, welche an das zur datentechnischen Verbindung dienende Kommunikationsnetz (K) angeschlossen ist.

3. Stromversorgungsstation (SV) nach Anspruch 1 oder 2 mit zumindest einem Messmodul (MM) zumindest zur Erfassung von Messwerten (PD) der Stromversorgungsstation (SV), welche an das zur datentechnischen Verbindung dienende Kommunikationsnetz (K) angeschlossen ist.

4. Stromversorgungsstation (SV) nach Anspruch 1 bis 3, wobei das Internet-Datenprotokoll ein TCP/IP-Datenprotokoll ist.

5. Stromversorgungsstation (SV) nach Anspruch 1 bis 4 mit integrierten Netzinterfaces (INI,INR,ZNI) zum Anschluss an das Kommunikationsnetz (K).

6. Stromversorgungsstation (SV) nach Anspruch 1 bis 5, wobei das Kommunikationsnetz (K) insbesondere zum datentechnischen Austausch von internen Stationsdaten (PD,EM) und externen Stationsdaten (BP,EM,DT) dient.

7. Stromversorgungsstation (SV) nach Anspruch 6, wobei die internen Stationsdaten (PD,EM) insbesondere Prozessdaten (PD) und elektronische Meldungen (EM) sind.

8. Stromversorgungsstation (SV) nach Anspruch 6, wobei die externen Stationsdaten (BP,EM,DT) insbesondere Betriebsparameter (BP), elektronische Meldungen (EM) und Dateien (DT) sind.

9. Stromversorgungsstation (SV) nach Anspruch 1 bis 8 mit einem Netzknoten (NK) zur Aufteilung des Kommunikationsnetzes (K) in ein internes Kommunikationsnetz (IK) und externes Kommunikationsnetz (EK).

10. Stromversorgungsstation (SV) nach Anspruch 9, wobei das interne Kommunikationsnetz (IK) ein Intranet ist.

11. Stromversorgungsstation (SV) nach Anspruch 9, wobei das externe Kommunikationsnetz (EK) das Internet ist.

12. Stromversorgungsstation (SV) nach Anspruch 9, wobei das externe Kommunikationsnetz (EK) das Intranet ist.

13. Stromversorgungsstation (SV) nach Anspruch 9 oder 10, wobei das durch den Netzknoten (NK) abgeteilte interne Kommunikationsnetz (IK) insbesondere zum datentechnischen Austausch von internen Stationsdaten (PD,EM) dient.

14. Stromversorgungsstation (SV) nach einem der Ansprüche 9, 11 oder 12, wobei das durch den Netzknoten (NK) abgeteilte externe Kommunikationsnetz (EK) insbesondere zum datentechnischen Austausch von externen Stationsdaten (BP,EM,DT) dient.

15. Stromversorgungsstation (SV) nach Anspruch 9 bis 14, wobei der Netzknoten (NK) als Router (RT) ausgebildet ist.

16. Stromversorgungsstation (SV) nach Anspruch 15, wobei der Router (RT) aufweist
a) mindestens zwei zweite integrierte Netzinterface (INR) zur Verbindung des internen Kommunikationsnetz (IK) mit dem ersten integrierten Netzinterface (INI) des jeweiligen Stromversorgungsmoduls (SM),
b) mindestens ein zweites integriertes Netzinterface (INR) zur Verbindung mit dem externen Kommunikationsnetzwerk (EK), und
c) Mittel zur Verbindungsherstellung zwischen den jeweiligen zweiten integrierten Netzinterface (INR).

17. Stromversorgungsstation (SV) nach Anspruch 5 bis 16, wobei die jeweiligen ersten integrierten Netzinterface (INI) der Stromversorgungsmodule (SM) in eine IT-Plattform (IT) integriert sind.

18. Stromversorgungsstation (SV) nach Anspruch 17, wobei die IT-Plattform (IT) zumindest weiterhin aufweist
a) eine Datenverarbeitungseinheit (DV) mit einem Betriebssystem (BS),
b) IT-Dienstapplikationen (ITD) zur datentechnischen Interaktion mit dem an das erste integrierte Netzinterface (INI) angeschlossene interne Kommunikationsnetz (IK),
c) einen Kommunikations-Stack (KS) zur Pufferung und Verwaltung der IT-Dienstapplikationen (ITD), und
d) zumindest eine Applikation (AP) zur Steuerung und Regelung zumindest eines Teils der Stromversorgungsstation (SV).

19. Stromversorgungsstation (SV) nach Anspruch 17 oder 18, wobei die IT-Plattformen (IT) der Stromversorgungsmodule (SM) identisch ausgebildet sind.

20. Stromversorgungsstation (SV) nach Anspruch 18 oder 19, wobei zumindest eine Applikation (AP) einer ersten IT-Plattformen (IT) die Masterfunktion zumindest zur Steuerung und Regelung der Stromversorgungsstation (SV) bildet.

21. Stromversorgungsstation (SV) nach Anspruch 20, wobei zumindest eine Applikation (AP) einer verbleibenden IT-Plattform (IT) die Masterfunktion nach Ausfall der ersten IT-Plattform (IT) bildet.

22. Stromversorgungsstation (SV) nach Anspruch 18 bis 21, wobei ein Web-Server (WS) als IT-Dienstapplikation (ITD) zur Verwaltung zumindest einer Webseite (WEB) der Stromversorgungsstation (SV) verwendet wird.

23. Stromversorgungsstation (SV) nach Anspruch 18 bis 22, wobei ein E-mail-Programm (EMP) als IT-Dienstapplikation (ITD) zum Senden und Empfang von elektronischen Meldungen (EM) verwendet wird.

24. Stromversorgungsstation (SV) nach Anspruch 18 bis 23, wobei ein Datei-Transfer-Programm (DTP als IT-Dienstapplikation (ITD) zum Auf- und Abladen von Dateien (DT) verwendet wird.

25. Modulares Stromversorgungssystem (MSS) mit zumindest einer dezentralen Stromversorgungsstation (SV) nach einem der Ansprüche 1 bis 24, aufweisend
a) zumindest eine zentrale Leitstelle (LS) zum fernsteuerbaren Austausch von externen Stationsdaten (BP,EM,DT) der jeweiligen dezentralen Stromversorgungsstationen (SV), insbesondere von Betriebsparametern (BP), Meldungen (EM) und Dateien (DT), und
b) ein Kommunikationsnetz (K) auf Basis eines Internet-Datenprotokolls zur datentechnischen Verbindung der Leitstelle (LS) mit den jeweiligen Stromversorgungsstationen (SV).

26. Modulares Stromversorgungssystem (MSS) nach Anspruch 25, wobei die Leitstelle (LS) mittels eines zentralen Netzinterface (ZNI) an das Kommunikationsnetz (K) angeschlossen ist.

27. Stromversorgungsstation (SV) nach Anspruch 26, wobei das zentrale integrierte Netzinterface (ZNI) in eine IT-Plattform (IT2) der Leitstelle (LS) integriert ist.

28. Stromversorgungsstation (SV) nach Anspruch 27, wobei die IT-Plattform (IT2) der Leitstelle (LS) zumindest weiterhin aufweist
a) eine Datenverarbeitungseinheit (DV) mit einem Betriebssystem (BS),
b) IT-Dienstapplikationen (ITD) zur datentechnischen Interaktion mit dem an das zentrale integrierte Netzinterface (ZNI) angeschlossene externe Kommunikationsnetz (EK),
c) einen Kommunikations-Stack (KS) zur Pufferung und Verwaltung der IT-Dienstapplikationen (ITD), und
d) zumindest eine Applikation (AP2) zum Bedienen und Beobachten der Stromversorgungsstationen (SV).

29. Modulares Stromversorgungssystem (MSS) nach Anspruch 25 bis 28, wobei das Kommunikationsnetz (K) ein externes Kommunikationsnetz (EK) ist.

30. Modulares Stromversorgungssystem (MSS) nach Anspruch 29, wobei das externe Kommunikationsnetz (EK) das Internet ist.

31. Verwendung einer Stromversorgungsstation (SV) nach einem der Ansprüche 1 bis 24 zur Speisung mindestens einer Telekommunikationsanlage (T) .

32. Verwendung eines modularen Stromversorgungssystem (MSS) nach einem der Ansprüche 25 bis 30 zur Speisung mindestens einer Telekommunikationsanlage (T).
